# EUROPEAN PATENT APPLICATION

(11) **EP 4 790 560 A1**
(43) Date of publication of application: **12.08.2026**
(21) Application number: 25222172.6
(22) Date of filing: 10.12.2025
(51) Int. Cl.: G06F 11/14, G06F 11/20, G06F 11/30, G06F 15/173, G06N 3/04, G06N 3/045, G06N 3/065, G06N 3/08, H04L 45/00, H04L 45/021, H04L 45/02, H04L 45/24, H04L 45/28, H04L 49/15

(54) **RESILIENT INTERCONNECT NETWORK IN LARGE SCALE COMPUTING**

(30) Priority: 07.02.2025 US 202519048260
(71) Applicant: Google LLC, Mountain View, CA 94043 (US)
(72) Inventor: ZHOU, Xiang, Mountain View, California, 94043 (US); LAM, Cedric Fung, Mountain View, California, 94043 (US); YIN, Shuang, Mountain View, California, 94043 (US); LIU, Hong, Mountain View, California, 94043 (US)
(74) Representative: Betten & Resch

(57) **Abstract**

The technology is generally for providing resilience to interconnect networks in large scale computing. Processing nodes of the network are arranged in reconfigurable pods that can contain large numbers of processing nodes. Processing nodes are grouped into building blocks of the pod, each building block may be contained within a physical computing rack. Processing nodes are interconnected via interconnect pathways that connect processing nodes to network switches. A building block's processing nodes communicate to network switches through regular communication pathways via the interconnect network. Additionally, a protection communication path is provided between a building block and the network. If a regular communication path is affected by a failure of a switch or interconnect link, the protection pathway is used to route the traffic affected by the failure without impacting the computing network. An electrical circuit switch is provided at the building block level to route data to the protection pathway.

## Description

### BACKGROUND

Large language model (LLM) based machine learning (ML) techniques are revolutionizing a number of industries. However, LLM training requires using large numbers of processing nodes arranged in a group such as a computing pod. Some pods may include thousands or tens of thousands of processing units, such as tensor processing units (TPUs). The processing nodes communicate with each other through an interconnect network providing communication paths between processing nodes. For ML training requirements the processing power of the processing nodes and the communication bandwidth of the interconnect network must be sufficient to provide speed and efficiency for the training process. In addition, LLM workloads require synchronous operation of all processing nodes making any failure of a processing node or interconnect network component capable of interrupting the processing job. As the number of processing nodes in the computing pods increase, the risk of failure of interconnect components rises with the resulting increase the number of interconnecting components. The ability to provide system-level redundancy of the interconnect network to protect against job disruption due to component failure is desired to achieve robustness and reliability in ML training networks.

### SUMMARY

The technology is generally for providing resilience to interconnect networks in large scale computing. Processing nodes of the network are arranged in reconfigurable pods that can contain large numbers of processing nodes. Processing nodes are grouped into building blocks of the pod, each building block may be contained within a physical computing rack. Processing nodes are interconnected via interconnect pathways that connect processing nodes to network switches. A building block's processing nodes communicate to network switches through regular communication pathways via the interconnect network. Additionally, a protection communication path is provided between a building block and the network. If a regular communication path is affected by a failure of a switch or interconnect link, the protection pathway is used to route the traffic affected by the failure without impacting the computing network. An electrical circuit switch is provided at the building block level to route data to the protection pathway.

The technology is further generally directed to the provision of a redundant interconnect communication path in a computing network, such as a reconfigurable superpod. A protected interconnect network for a computing network can include a plurality of processing nodes that are connected by the protected interconnect network. At least one building block can be defined as having a predetermined number of processing nodes. For example, a building block may be defined as the number of processing nodes that are housed within a computing rack. An electrical circuit switch (ECS) can be associated with each building block. The ECS may route a portion of data traffic of each building block to a protection communication path running in parallel with a regular communication path. The computing network can be a reconfigurable superpod. The reconfigurable superpod may include a number of dimensions, each processing node being in communication with each dimension.

A number of optical circuit switches (OCSs) include an OCS corresponding to each of the dimensions of the superpod, the OCS of each dimension being in communication with the ECS of each building block. A protection communication pathway is created from the processing nodes via the associated ECS and protection OCS connected to the processing nodes. In one example, a building block may be defined by 32 processing nodes housed in a single computer rack. According to some aspects of the technology the processing nodes may be tensor processing units (TPUs). The building block may be contained within a computer rack where the ECS associated with the building block is implemented as a top of rack (ToR) switch in the computer rack.

The superpod can include a first number of inter-chip interconnect (ICI) links that connect the processing nodes to a regular communication pathway and a second number of ICI links that connects the processing nodes to a protection communication pathway via the ECS switches. According to some examples, the ECS may include 32 ports facing the building block for receiving the protection ICI link from each processing node in a building lock. The ECS may further include 20 ports that are facing the protection OCS in the protection communication path.

In other examples, a building block may be partitioned into groups of processing nodes. Each group of processing nodes can be connected to an ECS with building block-facing ports connecting to a partitioned group of processing nodes. For example, a building block of 32 processing nodes may be partitioned into two groups of 16 processing nodes. A pair of ECSs can be connected to the building blocks with each ECS having 16 building block-facing ports and 10 ports facing the protection path.

In an aspect of the technology, the protection path may include a single protection OCS that is communication with all dimensions of the superpod. Each building block of the superpod in communication with the single protection OCS. In a configuration using a single protection OCS, the ECS associated with each building block may include 32 ports facing the building block and 4 ports facing the protection communication pathway.

To provide a redundant interconnect communication pathway, each processing node may have a number N of regular ICI links for regular communications and one additional protection ICI link for protection communications. In one example, each dimension may include two external facing hyperplanes to facilitate communications with the dimension in an inbound and an outbound direction. By way of example, an N+1 redundant interconnect network for a 5 dimension superpod can include two regular ICI links for each dimension and one additional protection ICI link in communication with an ECS connected to the protection communication pathway. Thus, for 5 dimensions the processing node includes 10 regular ICI links and 1 protection ICI link (10+1).

In another aspect of the described technology, a method for protecting an interconnect network of a computing network includes in a building block of the computing network having a number of processing nodes, establishing a first number of communication paths connected to a regular processing path and providing one additional protection communication path connected to a protection processing path where routing data from the building block to the protection processing path is achieved via an electrical circuit switch (ECS) associated with the building block. For a building block comprising 32 processing nodes each protection ICI link of each processing node is connected to an input port of a 32 x 20 port ECS. The 20 output ports are connected to a protection OCS in communication with each of the dimensions. The protection path may alternatively include a number of OCSs, where each OCS is connected to a corresponding dimension of the computing network.

### BRIEF DESCRIPTION OF THE DRAWINGS

FIG. 1 is a block diagram of a reconfigurable superpod according to aspects of the described technology.
FIG. 2 is a block diagram of a failure in an interconnect network of a superpod according to aspects of the described technology.
FIG. 3 is a block diagram of a redundant interconnect network at a processing node level according to aspects of the described technology.
FIG. 4 is a block diagram of a reconfigurable superpod according to aspects of the described technology.
FIG. 5 is a block diagram of a redundant protection interconnect network according to aspects of the described technology.
FIG. 6 is a block diagram of an example system according to aspects of the disclosure.
FIG. 7 is a process flow diagram for a method of establishing a redundant protection communication pathway according to aspects of the described technology.

### DETAILED DESCRIPTION

The technology is generally directed to an N+1 protected interconnect technology for a computing superpod where N represents the number of regular ICI links per processing node. Thus, a redundant protection ICI link in introduced on a per processing node (e.g., TPU) basis. The single protection ICI link can be used to protect all working ICI links from all dimensions for that processing node. The protection ICI links are provided through a rack-level electrical circuit switch (ECS) and a superpod level protection optical circuit switch (OCS). The technology can protect all optical interconnects, including OCSs, and electrical interconnects without performance degradation and with negligible increases in latency.

For a 5-dimensional (5D) Torus superpod with each TPU having 10 ICI links, there only needs to be on additional protection ICI link added resulting in a 10 + 1 ICI link protection. In the following description, an example of a 5D Torus based superpod architecture is used for descriptive purposes. It will be understood that the features and techniques discussed will apply to other network architectures and topologies.

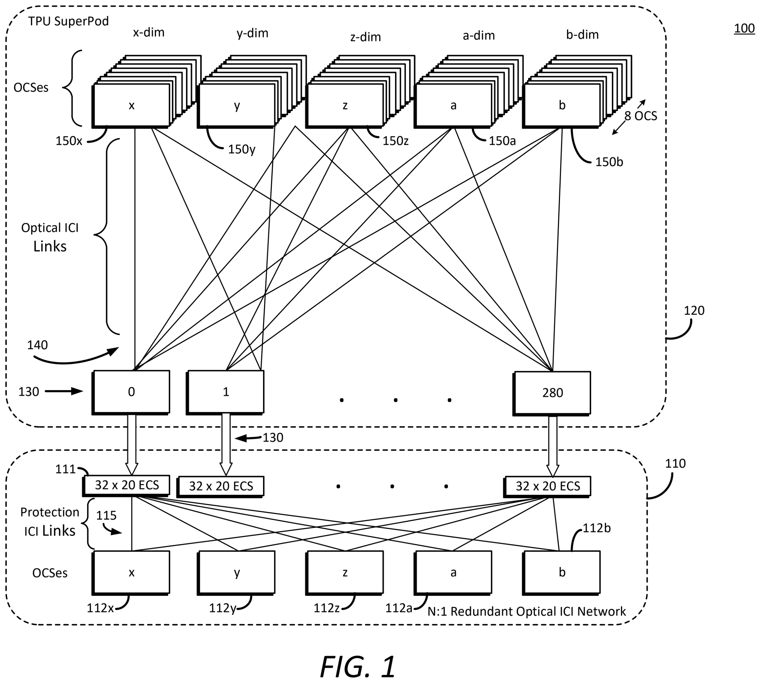

FIG. 1 shows the superpod level concept 100 of the described technology. A redundant protection ICI bidirectional link 110 is provided on a processing node (TPU) basis 130. The protection ICI link 130 is in addition to the 10 regular ICI links 140 connecting the processing node to each dimension 150. A low latency crossbar protection ECS 111 is provided for each building block 130. According to one aspect of the technology, the protection ECS 111 has 32 processing node-facing duplex ports connecting to the 32 protection ICI links 130 originating from the 32 processing nodes in the building block. The 32 processing nodes of a building black are typically seated within the single hardware rack. The protection ECS may comprise 20 external facing duplex ports that serve as optical ports connected to five redundant protection OCSs 112 representing one protection OCS for each dimension 112x, 112y, 112z, 112a, 112b. The system of FIG. 1 allows any failure in the regular optical ICI link paths 140 for any dimension 150, including the optical module, optical link, or OCS to be protected by the established dedicated protection pathways 115 of that dimension. Further, the protection ECS 111 may be configured is a way that allows all-to-all connection between any pair of the 32 duplex ports facing the processing nodes so that any electrical ICI link failure within the building block may also be protected.

In the example shown in FIG. 1 a single 32 x 20 protection ECS 415 is provided for each 32 TPU building block. However, the 32 TPUs can be partitioned within the same building block into two sub-building blocks containing 16 TPUs each. In this case, the protection ICI links corresponding to the two sub-building blocks can be connected to two smaller ECSs (not shown), For example, two 16 x 10 protection ECSs may be used. Accordingly, actual ECS radix requirements dependent on the computing pod topology and number of ICI links bundled in the optical domain can be accommodated at the building block level through partitioning.

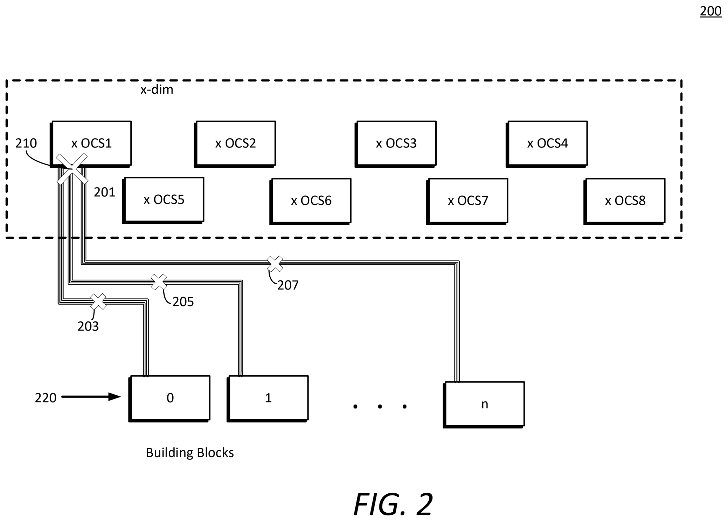

FIG. 2 illustrates that as superpods scale to sizes of perhaps 4 thousand nodes and greater, OCS and optical ICI link failures present a greater risk to providing improved computing pod availability. As may be seen in FIG. 2, a single OCS failure 210 will cause the loss of 4 ICI links 203, 205, 207 for every building block 220, essentially bringing down the entire superpod. The effective radius of a single optical ICI link failure, while smaller than the effect of a failed OCS 210, still results in the disabling of a whole building block 220. Considering the number of optical ICI links is several orders of magnitude higher than the number of OCSs, the probability of optical link failures can result in significant reductions in availability of computing pods.

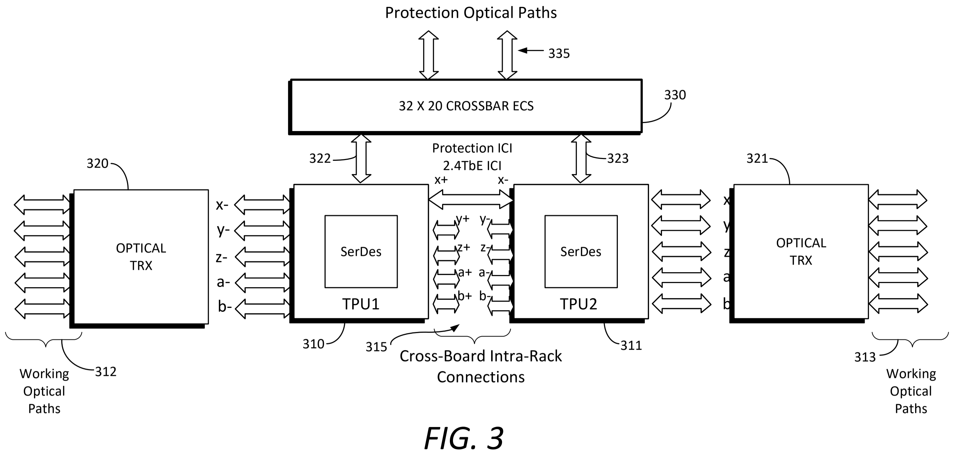

FIG. 3 is a block diagram of a redundant interconnect network at the processing node level according to aspects of the described technology. TPU1 processing node 310 and TPU2 processing node 311 provide computing services to the superpod system. Processing node 310 and processing node 311 may be housed within the same computing rack. Processing node 310 and processing node 311 can be in communication with each other through cross board intra-rack connections 315. The cross board intra-rack connections 315 can correspond to the dimensions of the superpod configuration. For example, for a 5D superpod, the dimensions may be denoted as dimension x, dimension y, dimension z, dimension a, and dimension b. Each dimension may contain two hyperplanes denoted + and - which represent a direction of communication.

In normal network communications, processing node 310 communicates via an optical transceiver module 320 which converts data to optical signals that are communicated via regular working optical paths 312. Similarly, processing node 311 communicates via optical transceiver module 321, which converts data to optical signals that are communicated via regular working optical paths 313.

In addition to the regular communication pathways, each processing node 310, 311 is provided with an additional protection link 322, 323. Processing node 310 includes protection ICI link 322, while processing mode 311 includes protection ICI link 323. The protection ICI links 322, 323 are connected to input ports on a protection crossbar ECS 330. Protection crossbar ECS 330 communicates via protection ICI links 322, 323 to protection optical paths 335. The protection optical paths 335 may include optical transceiver modules, protection OCSs to manage the protection communication pathways, and other components that provide a redundant communication pathway to supplement the regular working optical paths 312, 313 in case of failures in those paths.

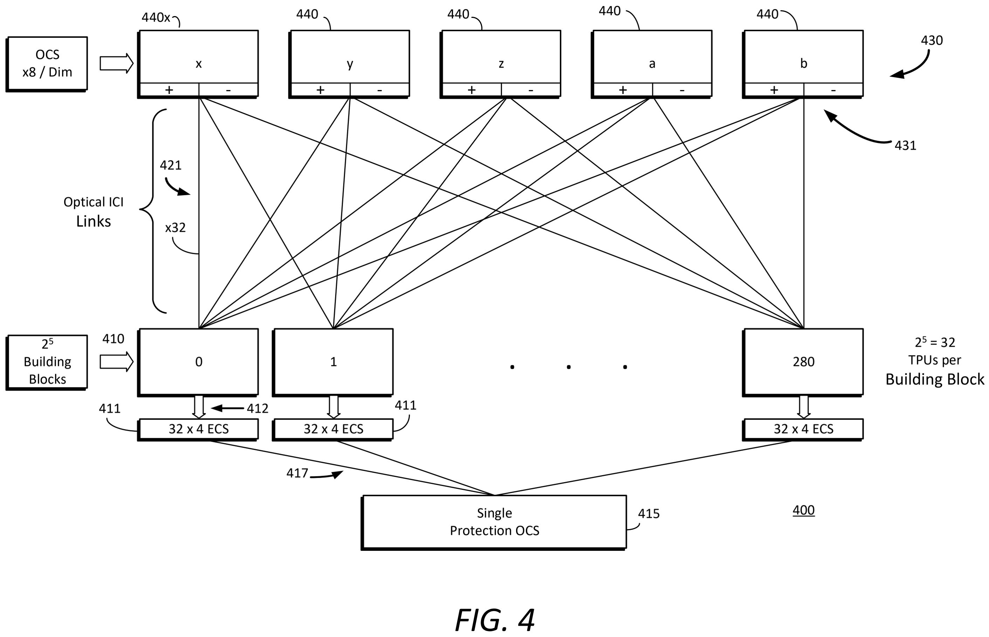

FIG. 4 shows an additional aspect of the described technology using a single protection OCS 415 in communication with all dimensions 440 of the computing pod. In this case, the protection ECS 411 for each building block is configured as a 32 x 4 protection ECS 411. The 32 processing node-facing ports are connected to 32 protection ICI links 412 originating from the same building block, while the 4 external facing ports are connected to a single protection OCS 415. The single protection OCS 415 is used to protect all dimensions from optical ICI link failures. Failures occurring in different dimensions 440 will therefore need reconfiguration of the building block, OCS and protection ICI links. Reconfiguration may be accomplished through messaging between the components of the protection communication pathway. For example, a failure at one of the links to a dimension 440 can be reported to the OCS 415, which relays the information to the building block 410. The building block 410 can reconfigure traffic to avoid the broken link and direct the affected data traffic through a working channel. Similarly, the protection OCS 415 can receive messaging from the building block to indicate a failure. The protection OCS 415 can be reconfigured to reroute other traffic via the pathway used by the failure in the building block 410.

FIG. 4 shows a schematic illustration of a reconfigurable superpod 200 where a 5D Torus topology using 2x2x2x2x2 (32 TPUs within one rack) as a building block 210 of the 5D superpod. Each TPU is assumed to have 10 1.6 Tbps ICI links 421, with one ICI link per dimension in each direction). For this superpod example, each building block 410 has 10 external facing hyperplanes 431 denoted X+, X-, Y+, Y-, Z+, Z-, a+, a-, b+ and b-. Where X, Y, Z, a, and b name each of the five dimensions 440 and + and - indicate the direction of each dimension 440.

For every building block 410, a total of 32 optical ICI links per dimension 421 via two hyperplanes 431 per dimension are connected to 8 OCSs associated with that dimension 440. With reference to the X dimension 440x, the connection strategy may be understood as follows. The no. 1 and no. 2 optical ICI links from X+ and the no. 1 and no. 2 optical ICI links from X- are connected to the no. 1 OCS of the X dimension. The no. 3 and no. 4 optical ICI links from X+ and the no. 3 and no. 4 optical ICI links from X- are connected to the no. 2 OCS. The remaining 24 optical ICI links in the dimension are directed to the remaining 6 OCSs to complete the dimension's connections.

As all building blocks 410 are connected to OCSs, healthy computing pods can be constructed using the OCSs, even while some processing nodes within certain building blocks 410 may be broken. In this manner, a reconfigurable superpod can increase the pod's availability provided the interconnect network is reliable enough to support the reconfiguration.

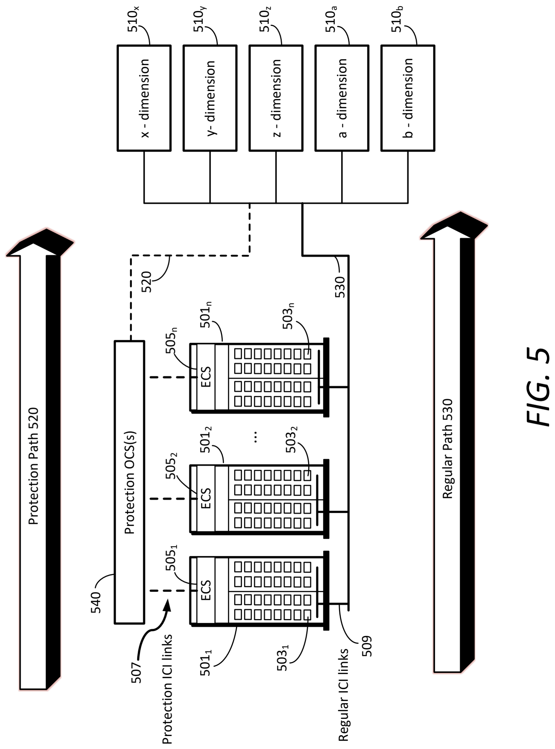

FIG. 5 shows a high-level conceptual illustration of a reconfigurable superpod with a redundant interconnect network according to aspects of the described technology. The superpod can be arranged by a number of building blocks. Each building block includes a number of processing nodes that are grouped to form the building block. A processing node can be a TPU to perform computing tasks. A group of TPUs 503 are associated with a building block. For example, TPUs 5031 are associated with building block 1, TPUs 5032 are associated with building block 2, and TPUs 503n are associated with building block n. In the example of FIG. 5, a building block can include 32 processing nodes or TPUs 503. By way of example, a building block containing the 32 TPUs 503 may be physically housed within an associated computer rack 501. Building blocks may be arranged according to their corresponding computer racks 5011, 5012, 501n.

Under normal operations, each building block communicates via regular communication links 509 to each dimension defined in the superpod topology. In the example shown in FIG. 5, there are five dimensions 510 denoted as dimension x, y, z, a, and b. Each dimension 510 includes two hyperplanes to allow communications in an incoming direction and outgoing direction, respectively. Each dimension 510 includes a set of OCSs that allow routing of information throughout the superpod.

According to aspects of the technology, the superpod of FIG. 5 further introduces a protection path 520 for providing redundant capacity for network traffic in the event of a failure in the normal communication path 530. The protection path 520 comprises one or more protection OCSs 540 that are in communication with the dimensions 510. For example, one protection OCS 540 may be provided for each dimension. In the example of FIG. 5, there are five protection OCSs 540, each protection OCS 540 in communication with one of the corresponding dimensions 510x, 510y, 510z, 510a and 510b. According to an alternative aspect of the technology as illustrated above in FIG. 4, a single protection OCS 540 may be provided that is in communication with each of the multiple dimensions 510.

The protection OCS 540 communicates with the processing nodes 503 through a number of protection ICI links 507 that are placed between the building block and the protection OCS 540. Each building block's associated computer rack 501 includes a low latency ECS 505 that connects the processing nodes 503 to the protection path 520 via the protection OCS(s) 540. According to one illustrative example, the ECS 505 includes 32 ports facing the building block. In an example where a building block includes 32 processing nodes 503, the number of building block facing ports in the ECS 505 can be 32 ports, providing one port for each processing node 503. ECS 505 further includes network facing ports that connect the ECS 505 to the protection path 520 via the protection OCS(s) 540. By way of non-limiting example, ECS 505 may include 20 network facing ports in communication with protection OCS(s) 540. In this example, the ECS 505 is configured as a 32 x 20 ECS. Other radix topologies for the ECS 505 may be used. In some implementations, the set of processing nodes 503 may be partitioned to correspond to the number of building block facing ports available in the ECS 505. The ECS 505 may be implemented as a top of rack (ToR) switch or a middle of rack (MoR) switch that can be located within the same computer rack 501 as the processing nodes making up the building block.

The superpod defines two parallel communication paths between the building block and the dimensions of the superpod. This technology has the effect of providing a redundant communication path for protecting against failures in the regular interconnect network. Any failure of a component in the interconnect network, such as an ICI link, optical module or OCS can be overcome by the implementation of a protection communication pathway. The use of a low latency ECS for establishing the protection communication pathway, provides an easily implemented solution that is less complex and less costly than alternative solutions while supporting synchronous operations in the system by preventing the introduction of significant latency.

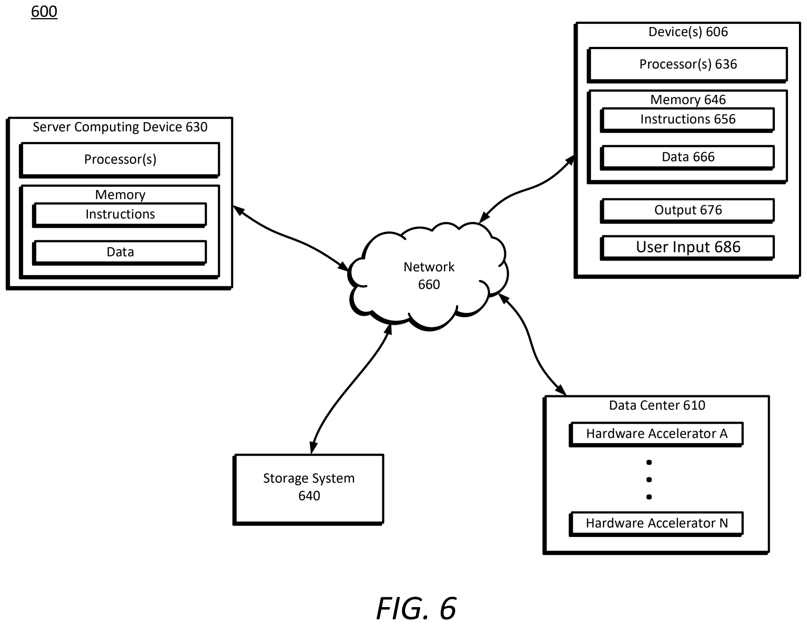

FIG. 6 illustrates an example system 600 in which the features described above may be implemented. It should not be considered limiting the scope of the disclosure or usefulness of the features described herein. In this example, system 600 may include device(s) 606, server computing device 630, storage system 640, and network 660.

Each device 606 may be a personal computing device intended for use by a respective user. The device 606 may include one or more processors 636, memory 646, data 666 and instructions 656. Each device 606 may also include an output 676, user input 686, and location sensor 696. By way of example only, devices 606 may be mobile phones or devices such as a wireless-enabled PDA, smartphones, a tablet PC, a wearable computing device (e.g., a smartwatch, AR/VR headset, smart helmet, etc.), a netbook that is capable of obtaining information via the Internet or other networks, or a smart home device, such as a home assistant, smart thermostat, smart doorbell, smart light, etc.

Memory 646 of device 606 may store information that is accessible by processor 636. Memory 646 may also include data that can be retrieved, manipulated or stored by the processor 636. The memory 646 may be of any non-transitory type capable of storing information accessible by the processor 636, including a non-transitory computer-readable medium, or other medium that stores data that may be read with the aid of an electronic device, such as a hard-drive, memory card, read-only memory ("ROM"), random access memory ("RAM"), optical disks, as well as other write-capable and read-only memories. Memory 646 may store information that is accessible by the processors 636, including instructions 656 that may be executed by processors 636, and data 666.

Data 666 may be retrieved, stored or modified by processors 636 in accordance with instructions 656. For instance, although the present disclosure is not limited by a particular data structure, the data 666 may be stored in computer registers, in a relational database as a table having a plurality of different fields and records, XML documents, or flat files. The data 666 may also be formatted in a computer-readable format such as, but not limited to, binary values, ASCII or Unicode. By further way of example only, the data 666 may comprise information sufficient to identify the relevant information, such as numbers, descriptive text, proprietary codes, pointers, references to data stored in other memories (including other network locations) or information that is used by a function to calculate the relevant data.

The instructions 656 can be any set of instructions to be executed directly, such as machine code, or indirectly, such as scripts, by the processor 636. In that regard, the terms "instructions," "application," "steps," and "programs" can be used interchangeably herein. The instructions can be stored in object code format for direct processing by the processor, or in any other computing device language including scripts or collections of independent source code modules that are interpreted on demand or compiled in advance. Functions, methods and routines of the instructions are explained in more detail below.

The one or more processors 636 may include any conventional processors, such as a commercially available CPU or microprocessor. Alternatively, the processor can be a dedicated component such as an ASIC or other hardware-based processor. Although not necessary, computing devices 606 may include specialized hardware components to perform specific computing functions faster or more efficiently.

Although Figure 6 functionally illustrates the processor, memory, and other elements of devices 606 as being within the same respective blocks, it will be understood by those of ordinary skill in the art that the processor or memory may actually include multiple processors or memories that may or may not be stored within the same physical housing. Similarly, the memory may be a hard drive or other storage media located in a housing different from that of the devices 606. Accordingly, references to a processor or device will be understood to include references to a collection of processors, devices, or memories that may or may not operate in parallel.

Output 676 may be a display, such as a monitor having a screen, a touchscreen, a projector, or a television. The display 676 of the one or more computing devices 606 may electronically display information to a user via a graphical user interface ("GUI") or other types of user interfaces. For example, as will be discussed below, display 676 may electronically display query results.

The user input 686 may be a mouse, keyboard, touch-screen, microphone, or any other type of input.

The devices 606 can be at various nodes of a network 660 and capable of directly and indirectly communicating with other nodes of network 660. Although one device is depicted in Figure 6, it should be appreciated that a typical system can include one or more devices, with each device being at a different node of network 660. The network 660 and intervening nodes described herein can be interconnected using various protocols and systems, such that the network can be part of the Internet, World Wide Web, specific intranets, wide area networks, or local networks. The network 660 can utilize standard communications protocols, such as WiFi, Bluetooth, 4G, 5G, etc., that are proprietary to one or more companies. Although certain advantages are obtained when information is transmitted or received as noted above, other aspects of the subject matter described herein are not limited to any particular manner of transmission.

In one example, system 600 may include one or more server computing devices 630 having a plurality of computing devices, e.g., a load balanced server farm, that exchange information with different nodes of a network for the purpose of receiving, processing and transmitting the data to and from other computing devices. For instance, one or more server computing devices 630 may be a web server that is capable of communicating with the one or more client computing devices 606 via the network 660. In addition, server computing device 630 may use network 660 to transmit and present information to a user of one of the other computing devices 606.

Server computing device 630 may include one or more processors, memory, instructions, data, etc. These components operate in the same or similar fashion as those described above with respect to computing device 606.

According to some examples, the server computing device 630 may be connected over the network to a data center 610 housing any number of hardware accelerators. The data center 610 can be one of multiple data centers or other facilities in which various types of computing devices, such as hardware accelerators, are located. Computing resources housed in the data center can be specified for repeated results monitoring, including identifying repeated query results, or the like.

The server computing device 630 can be configured to receive queries from the client computing device 606 on computing resources in the data center 610. For example, the environment can be part of a computing platform configured to provide a variety of services to users, through various user interfaces and/or application programming interfaces (APIs) exposing the platform services. The variety of services can include identifying content responsive to the query, determining whether query results are repeated query results, or the like. The client computing device 606 can transmit input data associated with a query. The server computing device 630 can receive the input data and, in response, identify and provide for output query results. When identifying the query results, the server computing device 630 can generate a signature for the query results. The generated signature may be compared to other signatures associated with the query results and/or historical query signatures. Based on the comparison, the server computing device 630 can determine whether the query results are repeated query results. In examples where the query results are repeated query results, the server computing device 630 can enable one or more preventative measures.

As other examples of potential services provided by a platform implementing the environment, the server computing device can maintain a variety of models in accordance with different constraints available at the data center. For example, the server computing device can maintain different families for deploying models on various types of TPUs and/or GPUs housed in the data center or otherwise available for processing.

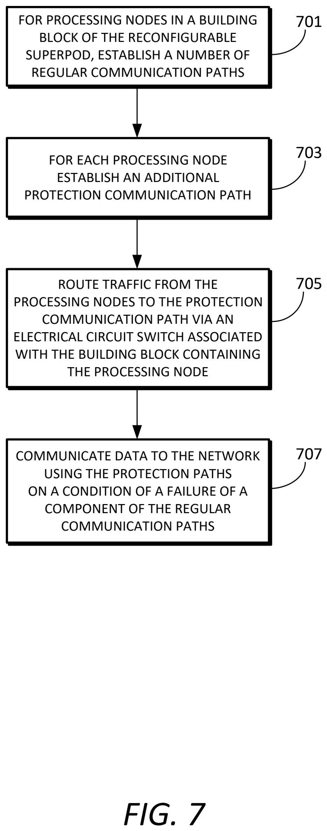

FIG. 7 is a process flow diagram for establishing a redundant protection communication pathway according to aspects of the described technology. For a computing system such as a reconfigurable superpod, processing nodes are arranged in groups denoted building blocks. For example, a building block may include the number of processing nodes housed within a physical computing rack. For the nodes in a building block, a number of regular communication paths between the processing nodes and the interconnect network of the superpod are established 701. For each processing node, an additional protection communication path is established 703. A low latency electrical circuit switch is associated with each building block and receives data from the protection communication path of each of the processing nodes in the building block 705. On a condition that a component of the regular communication paths experiences a failure, data is communicated to the network via the protection communication path 707. The protection communication paths from the processing nodes in the building block may protect from failures including but not limited to ICI links, optical modules or optical circuit switches.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, which is generated to encode information for transmission to suitable receiver apparatus for execution by a data processing apparatus.

The term "configured" is used herein in connection with systems and computer program components. For a system of one or more computers to be configured to perform particular operations or actions means that the system has installed on its software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a stand-alone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purposes logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A protected interconnect network for a computing network comprising:
a plurality of processing nodes connected by the protected interconnect network;
at least one building block comprising a predetermined number of processing nodes of the plurality of processing nodes;
an electrical circuit switch (ECS) associated with each of the at least one building block, the ECS routing a portion of data traffic of each building block to a protection communication path running in parallel with a regular communication path.

2. The protected interconnect network of claim 1, wherein the computing network is a reconfigurable superpod.

3. The protected interconnect network of claim 2, wherein the reconfigurable superpod defines a plurality of dimensions, each processing node in communication with each dimension.

4. The protected interconnect network of claim 3, comprising:
one optical circuit switch (OCS) in communication with each ECS corresponding to each of the at least one building block and in communication with each dimension of the plurality of dimensions; or
an optical circuit switch (OCS) corresponding to each of the dimensions of the plurality of dimensions, the OCS of each dimension in communication with the ECS of each of the at least one building block and its corresponding dimension.

5. The protected interconnect network of any one of claims 1 to 4,
wherein a building block of the at least one building block comprises 32 processing nodes; and/or
wherein the processing nodes are tensor processing units (TPU).

6. The protected interconnect network of any one of claims 1 to 5, further comprising:
a computing rack for housing one of the at least one building block; and
wherein each ECS for each building block is optionally configured on the computing rack as a top of rack (ToR) switch or a middle of rack (MoR) switch.

7. The protected interconnect network of any one of claims 4 to 6, comprising:
a first number of regular inter-chip interconnects (ICI) links connecting each processing node to a regular OCS of the computing network; and
a second number of protection inter-chip interconnects ICI connecting each ECS switch to the one protection OCS.

8. The protected interconnect network of any one of claims 1 to 7, wherein the ECS of each building block comprises:
a first number of building block facing ports connected to each processing node of the building block; and
a second number of external facing ports in communication with the protection path of the building block;
wherein the first and second number of ports are determined by a topology of the computing network.

9. The protected interconnect network of any one of claims 1 to 8, wherein each building block comprises two ECS, each ECS comprising:
a first number of building block facing ports connected to a subset of processing nodes of the building block; and
a second number of external facing ports in communication with the protection path of the building block;
wherein the first and second number of ports are determined by a topology of the computing network.

10. The protected interconnect network of any one of claims 1 to 9, wherein the ECS of each building block comprises:
32 building block facing ports connected to each processing node of the building block; and
20 external facing ports in communication with a single OCS in the protection path of the building block.

11. The protected interconnect network of any one of claims 1 to 10, each processing node in communication with:
a first number of regular inter-chip interconnect (ICI) links in communication with the regular communication path of the computing network; and
one protection ICI link in communication with the protection path of the computing network.

12. The protected interconnect network of claim 11, wherein each dimension comprises two external facing hyperplanes to facilitate communication with the dimension in an inbound and an outbound direction; and
wherein each processing node optionally further comprises:
two inter-chip interconnect (ICI) links for each of the dimensions; and
one additional ICI link in communication with the ECS of the building block containing the processing node.

13. A method for protecting an interconnect network of a computing network, comprising:
in a building block of the computing network comprising a plurality of processing nodes, establishing a first number of communication paths connected to a regular processing path;
in the building block, providing one additional protection communication path connected to a protection processing path; and
routing data from the building block to the protection processing path via an electrical circuit switch (ECS) associated with the building block of the computing network.

14. The method of claim 13, further comprising:
in a building block comprising 32 processing nodes, connecting each protection ICI link of each processing node of the building block to an input port of a 32 x 20 port ECS.

15. The method of claim 14, further comprising:
from the 32 x 20 port ECS, connecting 20 output ports of the 32 x 20 ECS to a protection optical circuit switch (OCS), the OCS in communication with each of a plurality of dimensions of the computer network; or
from the 32 x 20 port ECS, connecting 20 output ports of the 32 x 20 ECS to a plurality of protection optical circuit switches (OCSs), each OCS of the plurality of OCSs connected to a corresponding dimension of the computer network.
